# EUROPEAN PATENT APPLICATION

(11) **EP 1 734 449 A2**
(43) Date of publication of application: **20.12.2006**
(21) Application number: 06111393.2
(22) Date of filing: 20.03.2006
(51) Int. Cl.: G06F 11/14

(54) **System and method of efficient data backup in a networking environment**

(30) Priority: 21.03.2005 US 86163
(71) Applicant: MICROSOFT CORPORATION, Redmond, WA 98052 (US)
(72) Inventor: Field, Scott A., Redmond, WA 98052 (US)
(74) Representative: Grünecker, Kinkeldey, Stockmair & Schwanhäusser Anwaltssozietät

(57) **Abstract**

The present invention is directed to a system, methods, and a computer-readable medium for efficiently performing a backup of data in a networking environment. In embodiments of the present invention, a backup of a file from a local computing device to a remote computing device is performed. However, the file may not be transmitted to the remote computing device in all instances. Instead, aspects of the present invention determine whether the file is already stored on the remote computing device by another user or by an operating system and/or application program provider. In this regard, a signature of the file is generated and compared to signatures of files stored on the back end computing device. Only in instances when a match to the signature is not found is the complete file transmitted to the back end computing device and stored in a database.

## Description

### FIELD OF THE INVENTION

The present invention relates to computing devices and, more particularly, to restoring a computing device to recover lost data.

### BACKGROUND OF THE INVENTION

Data backup is a standard part of virtually all large-scale computer data storage systems, and some small computer systems, as well. Typically, in these types of systems, data written to a primary storage medium, such as a local disk, is copied to a backup medium, such as another disk or a tape, which can then be used for recovery in case of a disaster or other event that causes data on the primary medium to be lost. Some systems are configured so that data on the primary storage medium is copied to the backup medium on a periodic basis (e.g., hourly, daily, monthly, *etc.).* In the event of a disaster or other event that causes the loss of data, the most recent version of the data on the backup medium is copied back to the primary storage medium.

Existing systems for performing a backup of data may be susceptible to certain types of attacks from computer malware. While those skilled in the art will realize that the various computer attacks are technically distinct from one another, for purposes of the present invention and for simplicity in description, all malicious computer programs will be generally referred to hereinafter as computer malware, or more simply, malware. As more and more computers and other computing devices are interconnected through various networks such as the Internet, computer security has become increasingly more important, particularly from invasions or attacks delivered over a network or over an information stream by computer malware.

Some malware avoid being detected by antivirus software by exploiting a vulnerability in a benevolent application program that is already loaded in computer memory. More specifically, a vulnerability in the benevolent application program is exploited and an area of memory allocated to the program is modified or otherwise corrupted by the malware (e.g., a buffer overflow attack). As a result, a program that was identified as being safe to execute when initially loaded in memory may subsequently be modified with malicious program code. When a computer malware gains access to a computing device using this type of attack, the potential damage to the computing device is significant as the benevolent application "hijacked" by the malware may be a highly trusted application running with system and/or administrator privileges. As a result, the malware may inherit the same trust level as the benevolent application. When a malware executes with system and/or administrator privileges, the malware may have the ability to gain access to both the primary and secondary storage mediums, thereby circumventing the protections offered by existing backup systems.

System administrators typically maintain computing devices that are associated with large organization with "up-to-date" antivirus software and patches designed to close any vulnerabilities in a computing device. However, a significant percentage of individual users do not obtain and install software updates provided by operating system and antivirus vendors. In this instance, a computer associated with the user may be vulnerable to a malware, even though an "up-to-date" antivirus software would be able to detect the malware. Moreover, some backup systems require specific hardware devices and software that are expensive and/or difficult for individual users to configure. Thus, not only are individual users more susceptible to malware, but they are less likely to have the ability to recover data lost as a result of a malware attack.

What is needed is a system that performs a backup of user data on a remote computing device. Desirably, the system could be easily configured by individual users and would quickly backup and restore data on the local computing device, without requiring excessive network bandwidth.

### SUMMARY OF THE INVENTION

The foregoing problems with the prior state of the art are overcome by the principles of the present invention, which is directed toward a system, methods, and a computer-readable medium for efficiently performing a backup of data in a networking environment.

One aspect of the present invention is a method of performing a backup in a networking environment. More specifically, when a user issues a command to backup a file, the method determines whether the file is already stored on a back end computing device associated with a trusted source. The file may have previously been made available to the trusted source from another user of the backup service provided by the present invention. For example, the file may implement the functionality of an operating system or application program and, as a result, be common to multiple computing devices in the networking environment. To determine whether the file is already stored on the back end computing device, the method generates a signature of the file using a hash function. The signature is transmitted to the back end computing device where it is compared to signatures of files already available to the trusted source. If the transmitted signature does not match a signature previously obtained by the trusted source, the file is not stored on the back end computing device. In this instance, the complete file is then transmitted to the back end computing device using a network connection. Then, a database that tracks files on the target computing device that are stored on the back end computing device is updated to reflect that the file is associated with the target computing device.

In another aspect of the present invention, a method implemented in a networking environment that restores a volume on a target computing device to a previous state is provided. In this embodiment, the method generates data that represents the state of the volume using a disk state service. Then, the data that represents the volume state is transmitted from a target computing device to a back end computing device using a network connection. However, typically, the data that represents the volume state will be transmitted to the back end computing device at regular intervals. In any event, once the data that represents the volume state is stored on the back end computing device, a user may issue a command to restore the volume to a previous state. Then the data that represents the state of the volume is transmitted back to the target computing device and restored using the disk state service.

In yet another aspect of the present invention, a software system is provided for performing a backup of data on behalf of a target computing device. In an exemplary embodiment, the software system includes a remote backup module, an operating system, and a backup database. Among other things, the remote backup module identifies data on a target computing device that is not stored on a back end computing device. Then, the backup module causes a backup of data to be performed so that data that is not already available to the trusted source is transmitted to the back end computing device. In this embodiment, the software system includes an operating system operative to manage the data stored on the target computing device and to satisfy queries generated by the remote backup module. Also, a backup database is included in the software system that tracks files stored by a trusted source on behalf of a user of the backup service. In this way, the backup database is able to identify files that need to be restored to the target computing device when a restore command is issued.

In still another embodiment, a computer-readable medium is provided with contents, *i.e.,* a program that causes a computing device to operate in accordance with the methods described herein.

### BRIEF DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIGURE 1 is a pictorial depiction of a networking environment that includes a back end computing device suitable to backup data on behalf of a target computing device, in accordance with the present invention;
FIGURE 2 is a block diagram that illustrates components of a the target computing device illustrated in FIGURE 1;
FIGURE 3 is a flow diagram illustrating one exemplary embodiment of a software implemented module for performing a backup of data, which is formed in accordance with the present invention;
FIGURE 4 is a pictorial depiction of a typical server-based networking environment suitable to illustrate aspects of the present invention; and
FIGURE 5 is a pictorial depiction of a typical peer-to-peer networking environment suitable to illustrate aspects of the present invention.

### DETAILED DESCRIPTION

The present invention is directed to a system, methods, and a computer readable medium for efficiently performing a backup of data in a networking environment. In embodiments of the present invention, a backup of a file from a local computing device (hereinafter referred to as a "target computing device") to a remote computing device (hereinafter referred to as a "back end computing device") is performed. Moreover, the present invention uses highly optimized techniques for performing a backup that minimizes the impact on network resources. Aspects of the present invention determine whether the file is already stored on the back end computing device by another user or by an operating system and/or application program provider. In this regard, a signature of the file is generated with a hash function and compared to signatures of files stored on the back end computing device. In instances when a match to the signature is not found, the file is transmitted to the back end computing device and stored in a database. Then, data in the database may be recalled a later time and restored on the target computing device.

Although the present invention will primarily be described in the context of performing a backup of data in a networking environment, those skilled in the relevant art and others will appreciate that the present invention is also applicable to other types of environments. The following description first provides an overview of an exemplary networking environment in which the present invention may be implemented. Then an exemplary method that implements the present invention is described. The illustrative examples provided herein are not intended to be exhaustive or to limit the invention to the precise forms disclosed. Similarly, any steps described herein may be interchangeable with other steps or combinations of steps in order to achieve the same result.

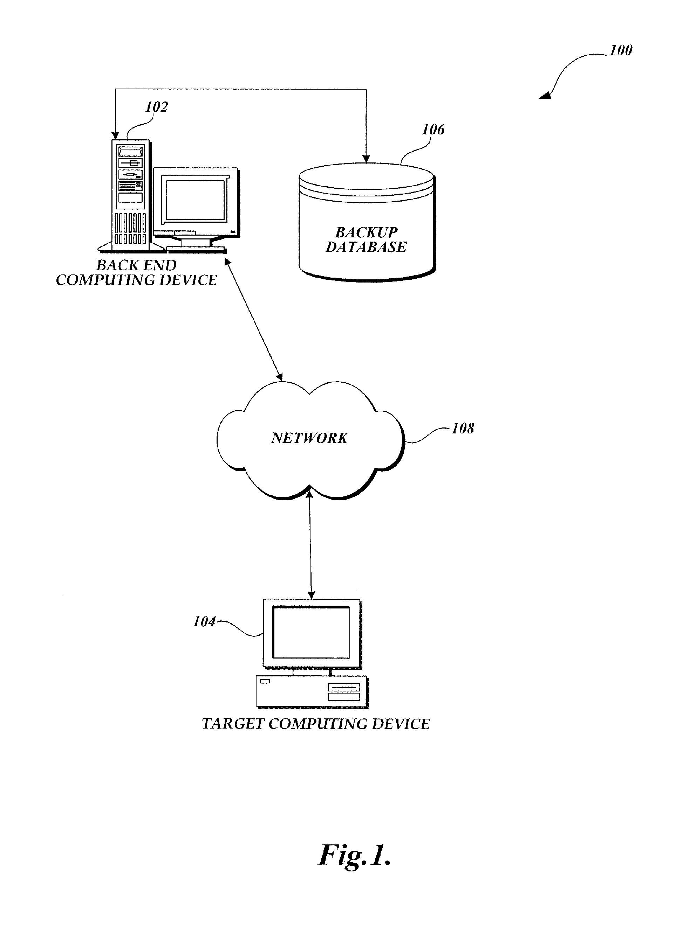

The following discussion is intended to provide a brief, general description of a networking environment 100 suitable to implement various aspects of the present invention. As illustrated in FIGURE 1, the networking environment 100 comprises a plurality of computing devices--namely, the back end computing device 102 and the target computing device 104. The back end computing device 102 is shown associated with a backup database 106. Also, the target computing device 104 is configured to communicate with the back end computing device 102 via the network 108, which may be implemented as a local area network ("LAN"), peer-to-peer network, wide area network ("WAN"), or the global network commonly known as the Internet. As known to those skilled in the art and others, the computing devices 102 and 104 illustrated in FIGURE 1 may be configured to exchange files, commands, and other types of data.

For the sake convenience, FIGURE 1 illustrates personal computers usable in a networking environment 100 in which complementary tasks may be performed by remote computing devices linked together through a communication network. However, those skilled in the art will appreciate that the invention may be practiced with many other computer system configurations. For example, the invention may be practiced with a personal computer operating in a standalone environment or with multiprocessor systems, minicomputers, mainframe computers, and the like. In this regard, the functions performed by the back end computing device 102, described herein, may be implemented by a plurality of computing devices. In addition to the conventional computer systems illustrated in FIGURE 1, those skilled in the art will also recognize that the invention may be practiced on other kinds of computing devices, including laptop computers, tablet computers, personal digital assistants (PDAs), or any device upon which computer software or other digital content is installed.

When software formed in accordance with the present invention is implemented in one or more computers, such as target computing device 104 and back end computing device 102, illustrated in FIGURE 1, the software provides a way to efficiently backup data. In one embodiment of the present invention, the back end computing device 102 is associated with a trusted source. Any computer communicatively connected to the network 108 may participate in a backup service provided by the trusted source. In this regard, the back end computing device 102 aggregates data received from multiple sources at a single location (e.g., the backup database 106), to prevent the unnecessary transmission of data.

In accordance with one embodiment, the present invention performs optimizations designed to reduce the amount of time and network bandwidth required to backup a computing device. A number of solutions have been proposed to facilitate the backup of files in a networking environment. Traditional methods to perform a backup of files may include copying network files and databases to a storage medium on a local computing device and then, if appropriate, synchronizing the stored copies with the network copies of the files maintained on one or more network servers. This "copy and synchronize" approach, however, is an inefficient use of network bandwidth, in that entire files are copied and transmitted during the backup and synchronization process.

The present invention takes advantage of the fact that most data stored on a computing device consists of files that implement the functionality of an operating system or application program. For example, a plurality of different computing devices that participate in the backup service will typically use the same operating system. In this regard, files that implement the functionality of the operating system may be provided by a software vendor for storage in the backup database 106. Also, an individual user who participates in the backup service may also provide this type of file to the trusted source. In either instance, a high percentage of files on the target computing device 104 may already be stored in the backup database 106. Thus, the optimization performed by the present invention determines whether a file that was submitted for backup by the target computing device 104 is already stored in the backup database 106. In instances when the file is stored in the backup database 106, a complete version of the file does not need to be transmitted. Instead, the backup database 106 tracks which files are associated with the target computing device 104 and restores copies of those files when needed.

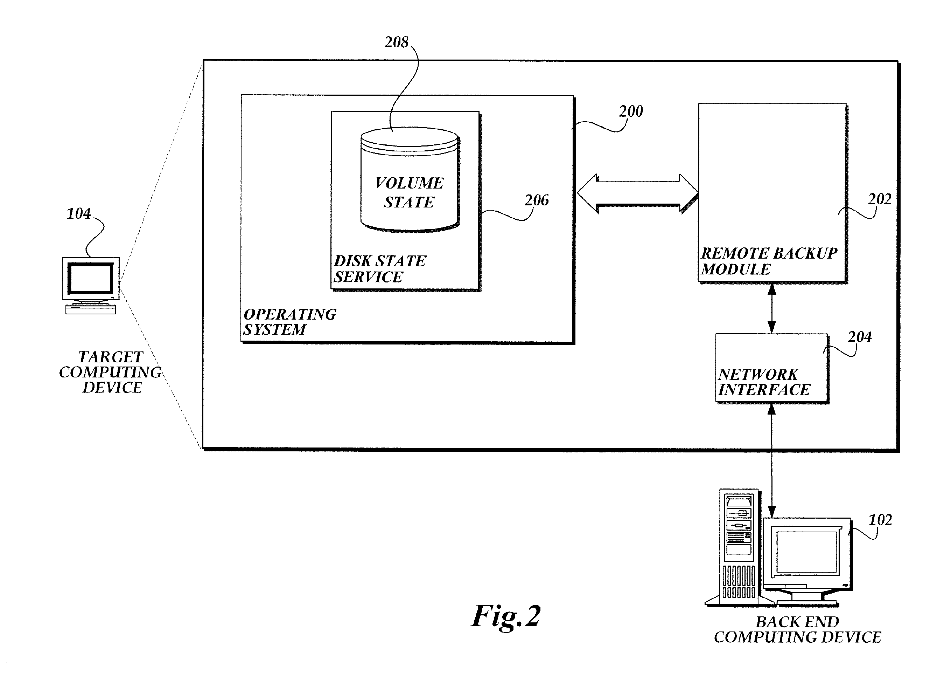

Now, with reference to FIGURE 2, components of the target computing device 104 illustrated in FIGURE 1 will be described. The following is intended to provide an exemplary overview of one computing device 104 in which aspects of present invention may be implemented. As mentioned previously, the target computing device 104 may be any one of a variety of devices including, but not limited to, personal computing devices, server-based computing devices, personal digital assistants, cellular telephones, other electronic devices having some type of memory, and the like. For ease of illustration and because it is not important for an understanding of the present invention, FIGURE 2 does not show the typical components of many computing devices, such as a CPU, keyboard, a mouse, a printer or other I/O devices, a display, *etc*. However, the target computing device 104 depicted in FIGURE 2 does include an operating system 200, a remote backup module 202, and a network interface 204. As further illustrated in FIGURE 2, the operating system 200 includes a disk state service 206 that records a volume state 208. Collectively, aspects of the present invention implemented in the target computing device 104 provide a trusted source with sufficient data to backup the data stored on the target computing device 104.

As illustrated in FIGURE 2, the target computing device 104 includes an operating system 200. The operating system 200 may be a general purpose operating system that is commercially available--such as a Microsoft® operating system, UNIX® operating system, or Linux® operating system. As known to those skilled in the art and others, a general purpose operating system performs basic tasks, such as managing the "I/O" of a computing device and tracking data stored in memory. For example, an application program may make a request to the operating system 200 in order to write data to an I/O device such as a disk. In this instance, the operating system 200 manages the communication of data between the I/O device and the application program.

In one embodiment of the present invention, a volume state(s) 208 from which the target computing device 104 may be restored and data recovered is maintained. For example, some operating systems provide a disk state service 206 designed to take point-in-time copies of a volume of data such as the Windows™ Volume Shadow Copy Services. Changes made to a volume after the point-in-time copy is generated are tracked so that the state of the volume may be reconstructed at a later time. More specifically, at a configurable interval the disk state service 206 takes a snapshot of a selected volume. In order to reduce the amount of data required to reconstruct this version of the volume, the disk state service 206 stores information about changes made to the volume. Stated differently, each saved version of a volume is not maintained by the disk state service 206. Instead, if a user modifies data on the volume, the disk state service 206 stores enough information about the modification to reconstruct a point-in-time version of the volume. Those skilled in the art and others will recognize that a disk state service 206 provides an Application Programming Interface ("API") that allows other software modules to obtain data that represents the volume state 208. Also, the APIs allow other software modules to pass the disk state service 206 data that represents the volume state and cause the volume to be reconstructed. The data that may be restored with the disk state service 206 includes, but is not limited to, operating system files and/or other system data, including registry entries as well as user files and/or other user data.

As illustrated in FIGURE 2, the target computing device 104 includes a remote backup module 202 that contains the logic for backup and data recovery implemented by the present invention. In one embodiment, the remote backup module 202 causes data that represents the volume state 208 to be stored on the back end computing device 102 via the network interface 204. Typically, data that represents the volume state 208 will be transmitted as part of an archival process that transmits the data to the back end computing device 102 at regular intervals. In any event, once the data is stored on the back end computing device 102, the remote backup module 202 may query the back end computing device 102 and obtain the previously transmitted data. Then, the module 202 may access APIs provided by the disk state service 206 to cause a volume on the target computing device 104 to be restored to the previous state.

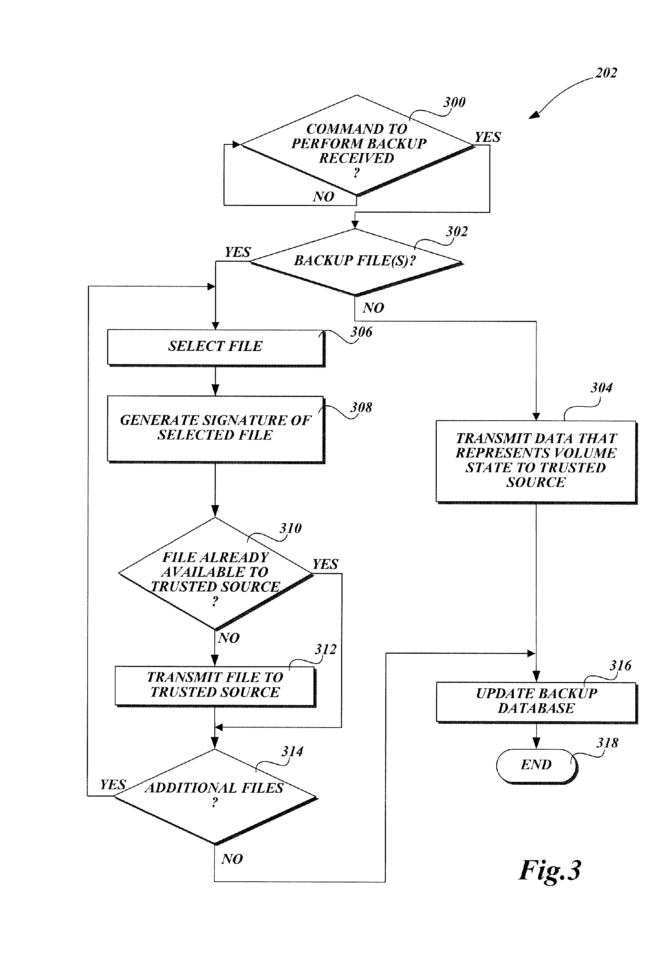

In another embodiment, described in further detail below with reference to FIGURE 3, the remote backup module 202 performs a backup of one or more files. Similar to the embodiment that restores a volume state, in this embodiment, the remote backup module 202 utilizes the network interface 204 to cause data to be transmitted and stored on the back end computing device 102. However, in this embodiment, a backup of one or more files is performed. Moreover, in this instance, the module 202 does not use a "copy and synchronize" approach to perform the backup. Instead, the transmission of data between the target computing device 104 and the back end computing device 102 is highly optimized and, as a result, minimizes the bandwidth and storage impact required to backup the files.

As known to those skilled in the art and others, FIGURE 2 is a simplified example of one target computing device 104 capable of implementing aspects of the present invention. However, actual embodiments of the target computing device 104 will have additional components not illustrated in FIGURE 2 or described in the accompanying text. Also, FIGURE 2 shows one component architecture for performing a backup in a networking environment, but other component architectures are possible.

Now with reference to FIGURE 3, a flow diagram that illustrates one exemplary embodiment of the remote backup module 202 formed in accordance with the present invention will be described. With continuing reference to FIGURES 1-2 and the accompanying descriptions, an exemplary remote backup module 202 illustrated in FIGURE 3 will now be described.

As illustrated in FIGURE 3, the remote backup module 202 remains idle, at block 300, until a command to backup data onto a remote computing device is received. A command to backup data onto a remote computing device, such as the back end computing device 102 (FIGURE 1), may be received in a number of contexts of which the following are only examples. A computer user may interact with a user interface provided by the present invention to select between different types of backup. For example, a computer user may choose to perform a backup that is capable of restoring a volume to a previous state. Alternatively, the computer user may choose to perform a backup in which one or more files will be restored. In this instance, the user may interact with the user interface and identify the files that will be capable of being restored. Also, as mentioned previously, a command to perform a backup may be generated automatically as part of an archival process. In this instance, different versions of a volume state or file are maintained on the back end computing device 102. As a result, a user may restore the volume state or file to any one of a number of available versions.

At block 302, the remote backup module 202 determines whether satisfying the command received at block 300 requires a backup of one or more files. As mentioned previously, the present invention may perform a backup on files and/or on a volume state. If a backup of at least one file will be performed, the module 202 proceeds to block 306, described below. Conversely, if a backup of a volume state will be performed, the module 202 proceeds to block 304.

At block 304, data that represents the state of a volume selected for backup is transmitted to a remote computing device associated with a trusted source (e.g., the back end computing device 102). Those skilled in the art and others will recognize that a volume state may be represented as a set of data that describes changes made to the volume since a specific point in time. At block 304, data that represents the volume state is generated using an existing software system. More specifically, the disk state service 206, illustrated and described above with reference to FIGURE 2, is configured to generate data that represents the current state of the volume. Then, the data that represents the volume state is transmitted to the remote computing device (e.g., the back end computing device 102) using networking protocols and communication mechanisms generally known in the art. In accordance with one embodiment of the present invention, once the data that represents the volume state is received at the remote computing device, it is stored in a database (e.g., the backup database 106) where it may be retrieved at a later point in time.

As illustrated in FIGURE 3, at block 306, the remote backup module 202 selects a file that was designated for backup. As mentioned previously, in one embodiment of the present invention, the remote backup module 202 performs a backup of one or more files. If block 306 is reached, a backup of one or many files for storage and/or retrieval from the trusted source will be performed. For each file selected, at block 306, the module 202 will generate a signature for the file that is compared to signatures of files that are already available to the trusted source. If the selected file is not already available to the trusted source, then the file is transmitted from the local computing device to a computing device associated with the trusted source.

At block 308, the remote backup module 202 generates a signature of the selected file. In an exemplary embodiment of the present invention, a hashing algorithm is used, at block 308, to process the selected file and generate the signature. For example, the existing hashing algorithm commonly known "SHA-1" may be used to generate the signature. However, other type of algorithms or functions that are capable of generating a signature from file data may be used to generate the signature used by the module 202 without departing from the scope of the present invention. Thus, the example provided above should be construed as exemplary and not limiting.

As illustrated in FIGURE 3, at decision block 310, the remote backup module 202 determines whether the selected file is already available to the trusted source. As mentioned previously, when a user issues a command to backup a file, a determination is made regarding whether the file is already available to the trusted source. For example, other users of the backup service may cause a file that implements the functionality of an application program or operating system to be stored in the backup database 104. Also, an application program or operating system provider may submit files to the trusted source for inclusion in the backup database 104. In either instance, when a file is submitted to the trusted source, a signature that uniquely identifies the file is generated and included in the backup database 104. The signatures of files in the backup database 104 are generated with the same hashing algorithm that was used to generate the signature of the selected file. Thus, at block 310, the remote backup module 202 causes the signature of the selected file to be transmitted to the trusted source and compared to signatures of files previously submitted to the trusted source. In instances when a matching signature for the selected file is identified, the remote backup module 202 proceeds to block 314 described below. Conversely, if a matching signature for the selected file is not identified and the file is not available to the trusted source, the module 202 proceeds to block 312.

The remote backup module 302, at block 312, transmits the selected file to a remote computing device associated with the trusted source (e.g., back end computing device 102). If block 312 is reached, the selected file was not previously transmitted to the trusted source and, therefore, is not available to the trusted source. Stated differently, a signature of the selected file could not be identified in the backup database 206 at block 310. Thus, to satisfy the backup command received at block 300, the selected file is transmitted to the remote computing device associated with the trusted source, at block 312. Since the file may be transmitted to a remote computing device using networking protocols and communication mechanisms generally known in the art, further description of these systems will not be provided here. Significantly, a file that was previously made available to the trusted source is not transmitted by the remote backup module 202. Instead, only a signature of the file, which is a fraction of the size of a complete file, is transmitted to the trusted source. As a result, the remote backup module 202 is able to backup data using less network bandwidth and other resources than is found in the prior art.

At decision block 314, the remote backup module 202 determines if any files that were the object of the backup command received at block 300 have not previously been selected. If additional file(s) will not be selected, the remote backup module 202 proceeds to block 316 described below. Conversely, if at least one additional file will be selected, the remote backup module 202 proceeds back to block 306, and blocks 306 through 314 repeat until all of the files that were the object of the backup command have been selected.

As illustrated in FIGURE 3, at block 316, the remote backup module 202 performs an update to the database associated with the trusted source. As described previously, in embodiments of the present invention, the backup database 106 stores files and/or data that represents a volume state on behalf of users who participate in the backup service provided by the present invention. Those skilled in the art and others will recognize that additional types of information are needed by the backup service to restore the data back onto a computing device associated with a user. For example, in some instances, one copy of a file that implements the functionality of an operating system or application program is stored in the backup database 104. However, more than one user of the backup service may need the file restored back onto a computing device. Thus, the backup database 104 maintains an entry for each user of the backup service. Among other items, the entry in the backup database 104 associated with a specific user contains "pointers" to operating system, application program files, and/or user level data that is shared with other users of the backup service. Also, by way of another example, an entry in the backup database 104 associated with a user will typically store file metadata. Among other items, file metadata will typically identify the location (*e*.*g*., a file path), name, and permissions of files that may be restored by the backup service. At block 316, the database is updated with this type of data required to restore files and/or a volume state. Then, the remote backup module 202 proceeds to block 318, where it terminates.

It should be well understood that remote backup module 202 may be implemented in conjunction with an archival system designed to maintain different versions of a file and/or volume state. For example, a user of the backup service provided by the present invention may automatically backup a computing device at regular intervals. Thus, the backup database 104 may contain different versions of the same file(s) and/or volume states representative of data on a computing device at a specific point-in-time. In this instance, a user may choose between the different versions of file(s) and/or a volume state that are maintained by the trusted source. In one embodiment of the present invention, older versions of file(s) and/or volume states stored in the backup database 104 are "aged" or transmitted to a separate remote store after a predetermined period of time.

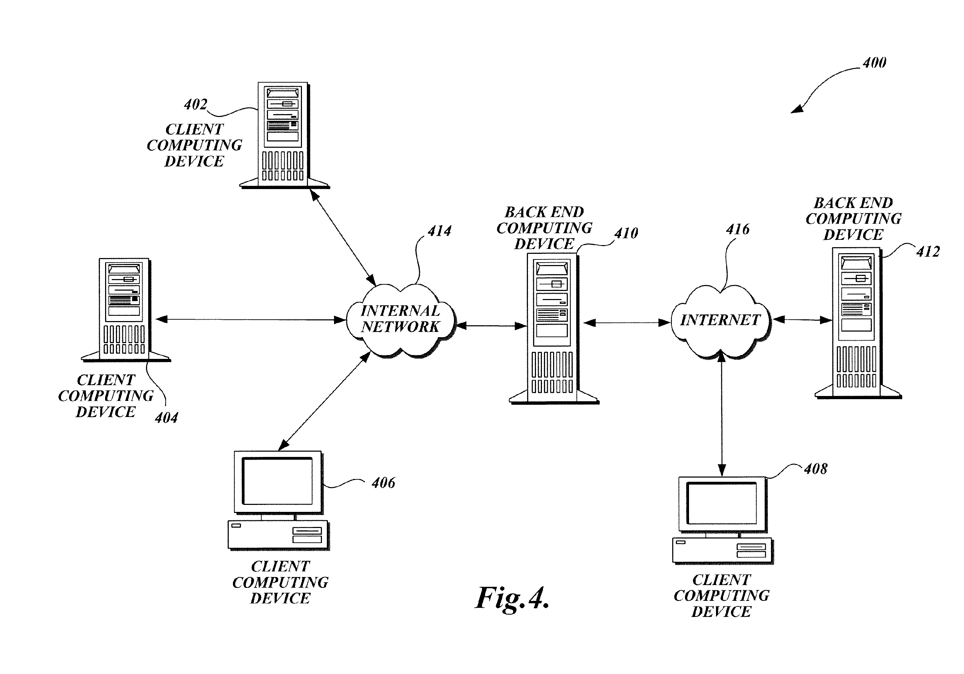

With reference now to FIGURE 4, applications of the present invention will be described in the context of an exemplary networking environment 400. The illustrated networking environment 400 comprises a plurality of client computing devices 402, 404, 406, and 408 and a plurality of back end computing devices 410 and 412. The back end computing device 410 is communicatively connected to the client computing devices 402, 404, and 406 via an intemal network 414 that may be implemented as a local area network ("LAN"), wide area network ("WAN"), or even a direct communication link. Conversely, the back end computing device 412 is configured to communicate with client computing device 408 over the Internet 416.

In one embodiment, the present invention is implemented in an enterprise-type organization where the backup of data is managed internally. Some organizations maintain a server/client-based computer network where resources and services are provided by server-based computing devices to client-based computing devices. With respect to the present invention, existing server-based computing devices associated with an enterprise organization may be used as a backup store for client-based computing devices. For example, the back end computing device 410 may implement a backup policy for all of the client computing devices 402, 404, and 406 connected to the internal network 418. In this instance, the back end computing device 410 may cause data on the client computing devices 402-406 to be stored on the back end computing device 410 without requiring input from a user. As a result, a system administrator may limit the ability of a user to delete or otherwise modify data in a way that is detrimental to the organization.

In another embodiment, the present invention is implemented as a Web-based backup service available to any computing device communicatively connected to the Internet 416. Increasingly, the Internet 416 provides services to computer users that are available regardless of the location of the user. For example, Web-based e-mail enables users to receive e-mail messages at any location by simply connecting to the Internet 420. With regard to the present invention, data on client computing device 408 may be transmitted to the back end computing device 412 via the Internet 416. Typically, the connection between the client computing device 408 will use a security mechanism, such as encryption, to prevent data from being intercepted by a third party.

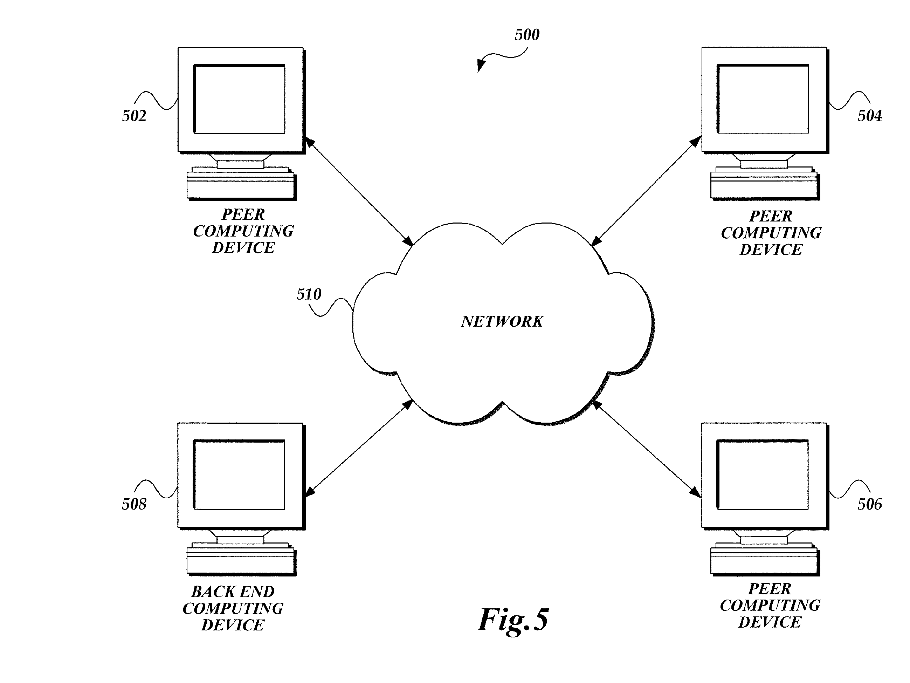

With reference now to FIGURE 5, another exemplary application of the present invention will be described in the context of a typical peer-to-peer networking environment 500. As shown in FIGURE 5, the typical peer-to-peer networking environment 500 includes a plurality of peer computing devices 502-508, all inter-connected via a communication network 510. As further illustrated in FIGURE 5, computing device 508 is configured to serve as a back end computing device that stores data on behalf of the peer computing devices 502-506. Those skilled in the art and others will recognize that in the peer-to-peer networking environment 500, servers or a hierarchy among the computing devices does not exist. Instead, all of the computing devices on the network 510 handle administrative tasks including, but not limited to, defining trust relationships with other computing devices. In one embodiment of the present invention, a computing device that maintains a trust relationship in a peer-to-peer networking environment may be used as a backup store for other computing devices. For example, increasingly, users are connecting computing devices to a "home" network where each computing device is a "peer" on the network. In this example, one computing device (e.g., the back end computing device 508) connected to the network may serve as a backup store for all of the other computing devices connected to the network (e.g., computing devices 502-506). However, this example should be construed as exemplary and not limiting, as peer-to-peer networks may be implemented in other contexts not described herein.

While the preferred embodiment of the invention has been illustrated and described, it will be appreciated that various changes can be made therein without departing from the spirit and scope of the invention.

The embodiments of the invention in which an exclusive property or privilege is claimed are defined as follows:

## Claims

1. In a networking environment that includes a first computing device and a second computing device, a method of performing a backup of a file stored on the first computing device, the method comprising:
(a) determining if the file is stored on the second computing device, including:
(i) generating a signature of the file;
(ii) transmitting the signature to the second computing device; and
(iii) determining whether the transmitted signature matches a signature stored on the second computing device;
(b) if the file is not stored on the second computing device, transmitting the file from the first computing device to the second computing device; and
(c) updating a database that tracks files on the first computing device that are stored on the second computing device.

2. The method as recited in Claim 1, further comprising, in response to receiving a command to restore the file, transmitting the file from the second computing device to the first computing device.

3. The method as recited in Claim 2, wherein the file is restored on the first computing device with the same path, name, and permissions that were associated with the file when transmitted from the first computing device the second computing device.

4. The method as recited in Claim 1, wherein the first computing device and the second computing device maintain a peer-to-peer relationship in the networking environment and wherein the second computing device is further configured to backup a file stored on the second computing device.

5. The method as recited in Claim 1, wherein the first computing device and the second computing device maintain a server and client relationship in the networking environment.

6. The method as recited in Claim 1, wherein the signature of the file is generated using a hashing algorithm.

7. The method as recited in Claim 6, wherein determining whether the transmitted signature matches a signature stored on the second computing device includes sequentially comparing the signature to signatures generated by applying a hashing algorithm to files stored on the second computing device.

8. The method as recited in Claim 1, wherein the file implements the functionality of an operating system or application program; and
wherein the file was previously submitted to the second computing device.

9. The method as recited in Claim 1, wherein updating a database that tracks files on the first computing device that are stored on the second computing device includes generating a pointer that references a file that implements the functionality of an operating system, application program, or contains user level data.

10. In a networking environment that includes a first computing device and a second computing device, a method of restoring a volume on the first computing device to a previous state, the method comprising:
(a) identifying the state of the volume using a disk state service;
(b) transmitting data that represents the state of the volume from the first computing device to the second computing; and
(c) in response to a command to restore the volume to the previous state:
(i) transmitting data that represents the state of the volume from the second computing device to the first computing device; and
(ii) causing the disk state service to restore the volume to the previous state.

11. The method as recited in Claim 10, wherein the disk state service is a shadow copy service that tracks changes made to the volume from a point-in-time.

12. The method as recited in Claim 1, wherein the first computing device and the second computing device maintain a peer-to-peer relationship in the networking environment.

13. The method as recited in Claim 1, wherein the first computing device and the second computing device maintain a server and client relationship in the networking environment.

14. The method as recited in Claim 10, wherein the state of the volume is identified by issuing an application interface call to the disk state service.

15. The method as recited in Claim 10, wherein data that represents the state of the volume is transmitted to the second computing device automatically, and wherein the volume may be restored back to one of a plurality of different versions of the volume.

16. In a computer network that includes a first computing device and a second computing device in communication, a software system for performing a backup of data stored on the first computing device, comprising:
(a) a remote backup module operative to selectively transmit data on the first computing device to the second computing device;
(b) an operating system for managing the data stored on the first computing device; and
(c) a backup database for storing data on the second computing device that is received from the first computing device.

17. The software system as recited in Claim 16, wherein the remote backup module does not transmit data from the first computing device to the second computing device that is already stored on the second computing device.

18. The software system as recited in Claim 16, wherein the remote backup module is configured to generate a unique signature for a file and determine whether the signature matches a file stored on the second computing device.

19. The software system as recited in Claim 16, wherein the operating system includes a disk state service operative to capture a point-in-time state of a volume on the first computing device.

20. The software system as recited in Claim 19, wherein the remote backup module is configured to transmit data that represents the state of the volume to the second computing device.
